# EUROPEAN PATENT APPLICATION

(11) **EP 4 819 219 A1**
(43) Date of publication of application: **07.10.2026**
(21) Application number: 26169449.1
(22) Date of filing: 31.03.2026
(51) Int. Cl.: H01M 4/131, H01M 4/136, H01M 4/36, H01M 4/525, H01M 4/58, H01M 10/0525

(54) **POSITIVE ELECTRODE AND RECHARGEABLE LITHIUM BATTERY INCLUDING THE SAME**

(30) Priority: 04.04.2025 KR 20250044239
(71) Applicant: SAMSUNG SDI CO., LTD., Yongin-si, Gyeonggi-do 17084 (KR)
(72) Inventor: Lee, Minju, 17084 Yongin-si (KR); Park, Sejeong, 17084 Yongin-si (KR); Lee, Junsik, 17084 Yongin-si (KR); Lee, Seongsun, 17084 Yongin-si (KR); Ko, Donghyun, 17084 Yongin-si (KR); Lee, Boram, 17084 Yongin-si (KR); Choi, Kyuhwan, 17084 Yongin-si (KR); Kang, Sanghyun, 17084 Yongin-si (KR)
(74) Representative: Michalski Hüttermann & Partner mbB

(57) **Abstract**

Provided are a positive electrode, and a rechargeable lithium battery including the positive electrode, the positive electrode including a positive electrode current collector and a positive electrode active material layer on the positive electrode current collector. The positive electrode active material layer includes an olivine-based positive electrode active material and a nickel-based layered positive electrode active material. The olivine-based positive electrode active material has a DD (Degree of Divergence) value defined that is greater than or equal to about 19.

## Description

### BACKGROUND

### 1. Field

A positive electrode, and a rechargeable lithium battery including the positive electrode, are disclosed.

### 2. Description of the Related Art

A rechargeable lithium battery may be recharged, and may have three or more times as high an energy density per unit weight as a conventional lead storage battery, nickel-cadmium battery, nickel hydrogen battery, nickel zinc battery, and the like. A rechargeable lithium battery may be also charged at a high rate, and may thus be commercially manufactured for a laptop, a cell phone, an electric tool, an electric bike, and the like. Improving on additional energy density of a rechargeable lithium battery may be advantageous.

A rechargeable lithium battery may be manufactured by injecting an electrolyte solution into an electrode assembly, which includes a positive electrode including a positive electrode active material capable of intercalating/deintercalating lithium ions, and a negative electrode including a negative electrode active material capable of intercalating/deintercalating lithium ions.

A representative composition of olivine-based positive electrode active materials, LiFePO₄, because phosphorus and oxygen within its crystal structure form a tetrahedral structure through strong covalent bonds, has an advantage of being chemically and thermally stable. In addition, as LiFePO₄ and FePO₄ have the same chemical structure, even if (when) lithium ions are deintercalated from LiFePO₄, LiFePO₄ may still maintain the stable structure, and accordingly, lithium iron phosphate-based positive electrode active materials have an advantage of minimal capacity loss even after hundreds of cycles.

However, the olivine-based positive electrode active materials have disadvantages of low diffusion property of lithium ions during the charge and discharge due to the irregular arrangement within positive electrode active material layers and low energy density due to a low operating voltage of 3.4 V. Accordingly, improving such issues of the olivine-based positive electrode active materials may be advantageous.

### SUMMARY

Some example embodiments include a positive electrode that can improve a diffusion property, energy density, and rate capability of lithium ions during charge and discharge of a rechargeable lithium battery while using an olivine-based positive electrode active material.

Some example embodiments include a positive electrode for a rechargeable lithium battery that includes a positive electrode current collector, and a positive electrode active material layer on the positive electrode current collector. The positive electrode active material layer includes an olivine-based positive electrode active material and a nickel-based layered positive electrode active material. The olivine-based positive electrode active material has a DD (Degree of Divergence) value defined by Equation 1 below that is greater than or equal to about 19. Equation 1: $DD \left(Degree of Divergence\right) = \left(Ia/Itotal\right) * 100 ,$

Some example embodiments include a rechargeable lithium battery including the positive electrode.

The positive electrode of some example embodiments may improve the diffusion property, energy density, rate capability, and the like, of lithium ions during charging and discharging of a rechargeable lithium battery by controlling the orientation of the olivine-based positive electrode active material.

Moreover, because the positive electrode of the above example embodiments further includes a nickel-based layered positive electrode active material in addition to the olivine-based positive electrode active material with controlled orientation, the above-described effect may be further improved.

### BRIEF DESCRIPTION OF THE DRAWINGS

FIG. 1 is a schematic view illustrating a conventional positive electrode.
FIG. 2 is a schematic view illustrating the positive electrode of some example embodiments.
FIG. 3 to FIG. 6 are schematic views illustrating a rechargeable lithium battery according to some example embodiments.

### DETAILED DESCRIPTION

Hereinafter, example embodiments of the present disclosure are described in detail. However, these embodiments are examples, the present disclosure is not limited thereto, and the present disclosure is defined by the scope of claims.

As used herein, when a specific definition is not otherwise provided, it is understood that when an element such as a layer, film, region, or substrate is referred to as being "on" another element, it can be directly on the other element or intervening elements may also be present.

As used herein, when a specific definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, or a reaction product of constituents.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode for Rechargeable Lithium Battery

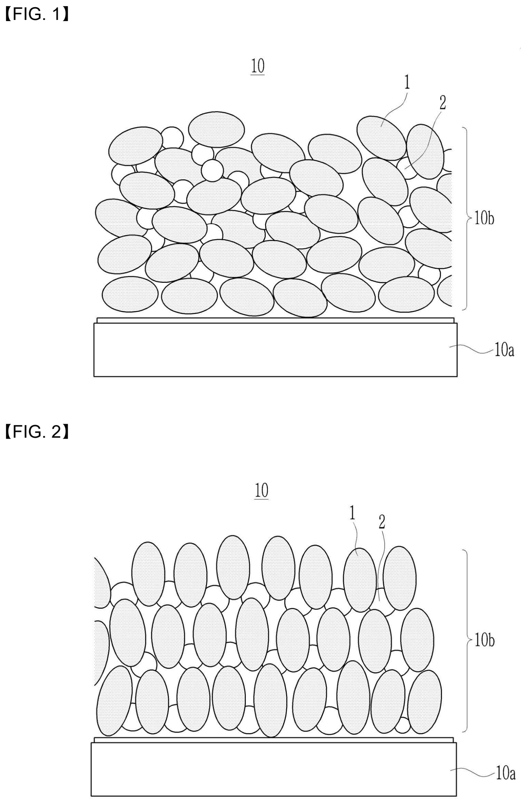

FIG. 1 is a schematic view illustrating a conventional positive electrode, and FIG. 2 is a schematic view illustrating a positive electrode of some example embodiments.

Some example embodiments include a positive electrode 10 for a rechargeable lithium battery including a positive electrode current collector 10a, and a positive electrode active material layer 10b on the positive electrode current collector 10a. The positive electrode active material layer 10b includes an olivine-based positive electrode active material 1 and a nickel-based layered positive electrode active material 2. The olivine-based positive electrode active material 1 has a DD (Degree of Divergence) value defined by Equation 1 below that is greater than or equal to about 19.
(1) The positive electrode 10 of some example embodiments may improve the diffusion, energy density, rate capability, and the like, of lithium ions during charging and discharging of a rechargeable lithium battery by controlling the orientation of the olivine-based positive electrode active material 1.
(2) Furthermore, the positive electrode 10 of some example embodiments further includes a nickel-based layered positive electrode active material 2 as well as the olivine-based positive electrode active material 1 with controlled orientation, so that the above-described effect may be further improved.

Hereinafter, the polarity of some example embodiments is described in detail.

### Orientation of Positive Electrode Active Material Layer

The olivine-based positive electrode active material 1 is a magnetically anisotropic particle, and when a positive electrode slurry including the olivine-based positive electrode active material 1 is coated on the positive electrode current collector 10a and a magnetic field is applied, an orientation thereof in the vertical direction may occur.

Meanwhile, the nickel-based layered positive electrode active material 2 is a magnetically isotropic particle, and even if (when) a positive electrode slurry including the same is coated on the positive electrode current collector 1 and a magnetic field is applied, the orientation thereof does not change.

The olivine-based positive electrode active material has a DD (Degree of Divergence) value defined by Equation 1 below that is greater than or equal to about 19, and for example may be in a range to ≥ 19 to ≤ 60, or a range to ≥ 30 to ≤ 60. Equation 1: $DD \left(Degree of Divergence\right) = \left(Ia/Itotal\right) * 100 .$

In Equation 1, la is a sum of peak intensities at non-planar angles measured by XRD using a CuK α ray, and Itotal is a sum of peak intensities at all angles measured by XRD using a CuK α ray.

The non-planar angles denote 2θ=42.4±0.2 °, 43.4±0.2 °, 44.6±0.2 °, and 77.5±0.2°, when measured by XRD using a CuKα ray, that is, a (100) plane, a (101)R plane, a (101)H plane, and a (110) plane, respectively. In general, graphite has a structure classified into a rhombohedral structure and a hexagonal structure having an ABAB type of stacking sequence according to a stacking order of graphene layers, and the R plane denotes the rhombohedral structure, while the H plane denotes the hexagonal structure.

Thus, the la may be a sum of peak intensities at 2Θ = 42.4±0.2 °, 43.4±0.2 °, 44.6±0.2 °, and 77.5±0.2 ° measured by XRD using a CuK α ray.

The all angles denote 2θ = 26.5±0.2 °, 42.4±0.2 °, 43.4±0.2 °, 44.6±0.2 °, 54.7±0.2 °, and 77.5±0.2 ° when measured by XRD using a CuKα ray, that is, a (002) plane, a (100) plane, a (101)R plane, a (101)H plane, a (004) plane, and a (110) plane. A peak at 2θ = 43.4±0.2 ° may also be considered to appear by overlapping with a peak of a (101)R plane of a carbon-based material with another peak of a (111) plane of a current collector, for example, Cu.

Thus, the Itotal may be a sum of peak intensities at 2Θ=26.5±0.2 °, 42.4±0.2 °, 43.4±0.2 °, 44.6±0.2 °, 54.7±0.2 °, and 77.5±0.2 ° measured by XRD using a CuK α ray.

In general, peak intensity indicates a height of a peak or an integral area of the peak, and according to some example embodiments, the peak intensity indicates the integral area of a peak.

In some example embodiments, the XRD is measured under a measurement condition of 2θ = 10 ° to 80 °, a scan rate (°/S) of 0.044 to 0.089, and a step size (°/step) of 0.013 to 0.039 by using a CuKα ray as a target ray but removing a monochromator to improve a peak intensity resolution.

The DD values indicates that the olivine-based positive electrode active material 1 included in the positive electrode active material layer 10b are oriented at a desired or predetermined angle, and a larger value indicates that the olivine-based positive electrode active material is oriented. That is, the larger the DD value, the greater the angle at which the olivine-based positive electrode active material 1 is oriented relative to one surface of the substrate. Additionally, these DD values are maintained even when charging and discharging are performed.

In some example embodiments, the DD value of the olivine-based positive electrode active material 1 may be greater than or equal to about 19, for example, in a range to ≥ 20 to ≤ 60, ≥ 25 to ≤ 60, ≥ 30 to ≤ 60, ≥ 30 to ≤ 55, ≥ 35 to ≤ 55, or ≥ 40 to ≤ 55. The fact that the DD value of the positive electrode 10 is greater than or equal to about 19 means that the olivine-based positive electrode active material 1 is substantially perpendicular to the current collector 10a at a given angle, and therefore means that the positive electrode active material layer 10b of the positive electrode 10 is an orientation layer. For example, the olivine-based positive electrode active material 1 being substantially perpendicular does not necessarily mean being at a 90 ° angle to the current collector 10a, but rather means being at an angle close to 90 °.

If (when) the DD value of the olivine-based positive electrode active material 1 is less than about 19, the positive electrode active material layer 10b including the olivine-based positive electrode active material 1 corresponds to a non-orientation layer, or even if (when) the positive electrode active material layer 10b is an orientation layer, the expansion effect is small and thus not suitable.

The olivine-based positive electrode active material 1 may have a diffraction peak intensity ratio I₍₀₀₂₎/I₍₂₀₀₎ of the (002) plane and the (200) plane in an X-ray diffraction spectrum that is greater than about 0.5 and less than or equal to about 1, greater than or equal to about 0.6 and less than or equal to 1, or greater than or equal to about 0.7 and less than or equal to 0.9.

In this way, since the olivine-based positive electrode active material 1 is in a vertical direction with respect to the current collector 10a, volume expansion may occur in a horizontal direction during charging and discharging of a battery including the positive electrode. Therefore, a nickel-based layered positive electrode active material capable of improving energy density may be readily applied simultaneously or contemporaneously.

### Compression Density and Porosity of Positive Electrode Active Material Layer

The positive electrode active material layer may have a compression density, which is calculated as LL (mg/cm²) / thickness (g/cc) of the positive electrode active material layer, that is greater than or equal to about 2 g/cc and less than or equal to about 3 g/cc, greater than or equal to about 2.1 g/cc and less than or equal to about 2.8 g/cc, or greater than or equal to about 2.3 g/cc and less than or equal to about 2.5 g/cc.

The positive electrode active material layer may have a porosity, obtained using a mercury intrusion porosimetry, that is greater than about 25 vol% and less than or equal to about 35 vol%, greater than or equal to about 26 vol% and less than or equal to about 33 vol%, or greater than or equal to about 28 vol% and less than or equal to about 30 vol%.

### Ionic Resistance of Positive Electrode

The positive electrode may have an ionic resistance (Rion) calculated from the tortuosity obtained after manufacturing a symmetric cell of the positive electrode, that is greater than or equal to about 10 Ωcm² and less than about 18 Ωcm², greater than or equal to about 10 Ωcm² and less than or equal to about 15 Ωcm², or greater than or equal to about 11 Ωcm² and less than or equal to about 13 Ωcm².

### Olivine-based Positive Electrode Active Material

The olivine-based positive electrode active material may be represented by Chemical Formula 1 below.

Chemical Formula 1: LiₐFexMyPO_{4-b}X_{b}.

In Chemical Formula 1, 0.9≤a≤1.1, 0.1≤x≤1, 0=y≤0.9, and 0≤b≤0.1; M is or includes one or more of Al, Co, Cr, Cu, Mg, Mn, Mo, Ni, Se, Si, Ti, V, Zn, Nb and Zr; and X is or includes one or more of F and CI.

The D₅₀ particle size of the olivine-based positive electrode active material 1 may be in a range to ≥ 0.1 µm to ≤ 10 µm, ≥ 0.3 µm to ≤ 5 µm, or ≥ 0.5 µm to ≤ 2 µm.

### Nickel-based Layered Positive Electrode Active Material

The nickel-based layered positive electrode active material may be represented by Chemical Formula 2 below.

Chemical Formula 2: Liₐ₁Niₓ₁M¹₁M²_{z1}O_{2-b1}X_{b1}.

In Chemical Formula 2, 0.9≤a1≤1.8, 0.3≤x1≤1, 0≤y1≤0.7, 0≤z1≤0.7, 0.9≤x1+y1+z1≤1.1, and 0≤b1≤0.1; M¹ and M² are or include each independently one or more of Al, B, Ba, Ca, Ce, Co, Cr, Cu, Fe, Mg, Mn, Mo, Nb, Si, Sn, Sr, Ti, V, W, and Zr; and X is or includes one or more of F, P, and S.

In Chemical Formula 2, 0.6≤x1≤1, 0≤y1≤0.4, and 0≤z1≤0.4, or 0.8≤x1≤1, 0≤y1≤0.2, and 0≤z1≤0.2.

For example, the nickel-based layered positive electrode active material 2 may be or include a high nickel content that is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on 100 mol% of metal excluding lithium in a lithium transition metal composite oxide. The high-nickel layered positive electrode active material 2 may achieve high capacity, and may be applicable to a high-capacity, high-density rechargeable lithium battery.

The D₅₀ particle size of the nickel-based layered positive electrode active material may be in a range to ≥ 1 µm to ≤ 20 µm, ≥ 5 µm to ≤ 18 µm, or ≥ 10 µm to ≤ 15 µm.

### Amount of Positive Electrode Active Material

A total amount of the olivine-based positive electrode active material 1 and of the nickel-based layered positive electrode active material 2 may be in a range to ≥ 90 wt% to ≤ 99.5 wt% based on100 wt% of the positive electrode active material layer 10b.

A weight ratio of the olivine-based positive electrode active material 1 and of the nickel-based layered positive electrode active material 2 may be in a range of about 1:99 to about 99:1, about 10:90 to about 90:1, or about 50:50 to about 85:15.

Within the above range, the effects of the olivine-based positive electrode active material 1 and of the nickel-based layered positive electrode active material 2 may be harmonized.

### Conductive Material

The positive electrode active material layer 10b may further include a conductive material and a binder.

An amount of the binder and conductive agent may be in a range to ≥ 0.5 wt% to ≤ 5 wt%, respectively, based on 100 wt% of the positive electrode active material layer.

The conductive material is included to provide electrode conductivity, and any electrically conductive material may be used as a conductive material unless the electrically conductive material causes an adverse chemical change in the battery.

For example, the conductive material may include a carbon-based material such as, e.g., at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The conductive material may also be or include a magnetically isotropic particle like the olivine-based positive electrode active material 1, in which case the conductive material may be more helpful in improving cycle-life and rate capability of a rechargeable lithium battery.

For example, the conductive material may be or include at least one of nano-carbon (Nano-C) such as carbon black (CB), denka black (CB); a carbon nanotube (CNT) such as a multi-wall carbon nanotube (MWCNT), a single-wall carbon nanotube (SWCNT), and a thin-wall carbon nanotube (TWCNT); graphene, or a combination thereof.

### Binder

The positive electrode active material layer may further include a binder.

An amount of the above binder may be in a range to ≥ 0.5 wt% to ≤ 5 wt% based on 100 wt% of the positive electrode active material layer.

The binder improves binding properties of positive electrode active material particles with one another and with a current collector. Examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

### Compression Density

The compression density of the positive electrode active material layer may be in a range to ≥ 2.3 g/cc to ≤ 3.0 g/cc, ≥ 2.5 g/cc to ≤ 2.7 g/cc, or ≥ 3.3 g/cc to ≤ 3.4 g/cc.

This corresponds to a range that is higher than the compression density of the positive electrode active material layer in which the olivine-based positive electrode active material is randomly arranged.

### Rechargeable Lithium Battery:

Some example embodiments include a rechargeable lithium battery including the positive electrode of the above-described example embodiments; a negative electrode; and a separator between the positive electrode and the negative electrode.

Due to the positive electrode of the above-described example embodiment, the diffusion, energy density, rate capability, and the like, of lithium ions during discharge may be improved.

Hereinafter, a rechargeable lithium battery of some example embodiments is described in detail, excluding duplicate descriptions.

### Negative Electrode Active Material

The negative electrode active material may include at least one of a material capable of reversibly intercalating/deintercalating lithium ions, a lithium metal, a lithium metal alloy, a material capable of doping/dedoping lithium. or a transition metal oxide.

The material capable of reversibly intercalating/deintercalating lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x ≤ 2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. According to some example embodiments, the silicon-carbon composite may be in the form of silicon particles, and amorphous carbon coated on the surface of the silicon particles. The amorphous carbon may also be present between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

### Negative Electrode

A negative electrode for a rechargeable lithium battery includes a current collector, and a negative electrode active material layer on the current collector. The negative electrode active material layer includes a negative electrode active material, and may further include a binder and/or a conductive material.

For example, the negative electrode active material layer may include ≥ 90 wt% to ≤ 99 wt% of the negative electrode active material, ≥ 0.5 wt% to ≤ 5 wt% of the binder, and ≥ 0.5 wt% to ≤ 5 wt% of the conductive material.

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, at least one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes an adverse chemical change in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

### Electrolyte Solution

An electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more types of solvents.

When using a carbonate-based solvent, a cyclic carbonate and a chain carbonate may be mixed, and the cyclic carbonate and the chain carbonate may be mixed in a volume ratio in a range of about 1:1 to about 1:9.

The electrolyte solution may further include at least one of vinylethyl carbonate, vinylene carbonate, fluoroethylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent supplies lithium ions in a battery, enables an operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

### Separator

Depending on the type of rechargeable lithium battery, a separator may be present between the positive and negative electrodes. Such a separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate and a coating layer including an organic material, an inorganic material, or a combination thereof, on one surface or on both surfaces of the porous substrate.

The porous substrate may be or include a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Rechargeable Lithium Battery

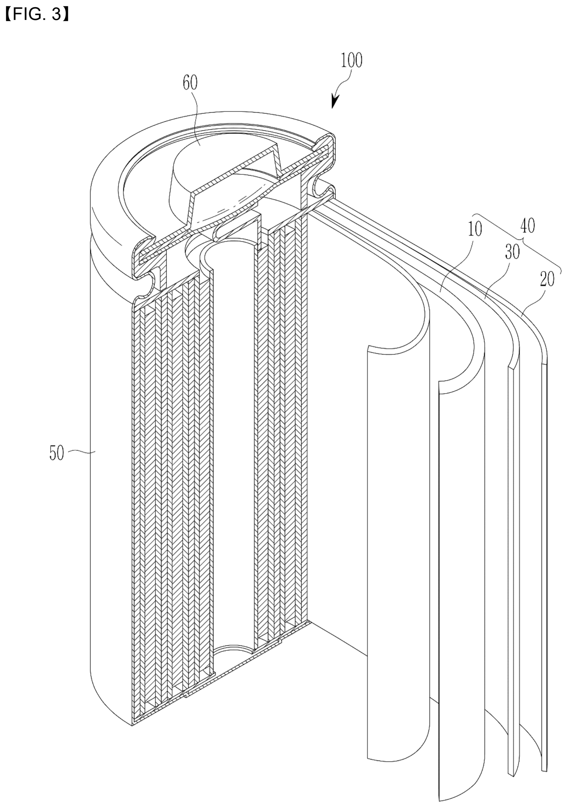

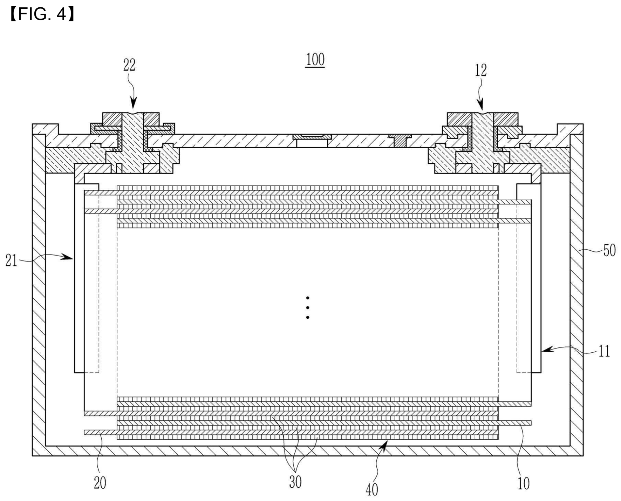

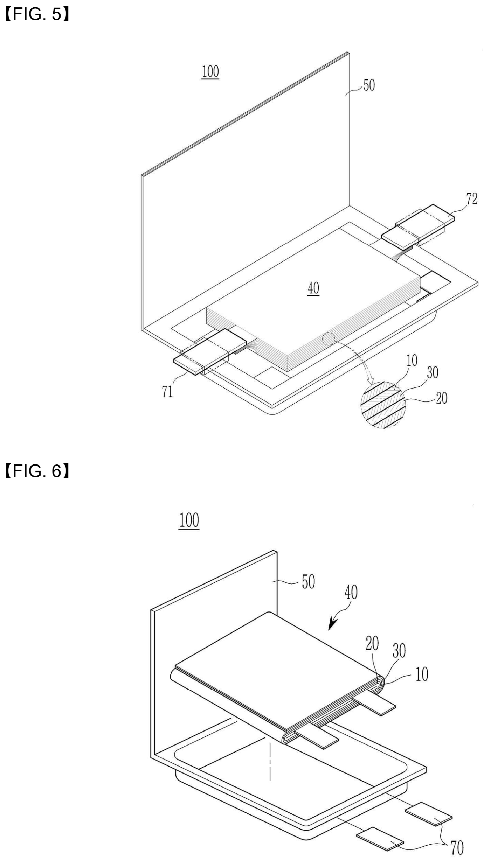

The rechargeable lithium battery may be classified into cylindrical, prismatic, pouch, or coin-type batteries, and the like depending on the shape thereof. FIG. 3 to FIG. 6 are schematic views showing the rechargeable lithium battery according to some example embodiments, where FIG. 3 is a cylindrical battery, FIG. 4 is a prismatic battery, and FIG. 5 and FIG. 6 are a pouch-shaped battery. Referring to FIG. 3 to FIG. 6, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 3. In FIG. 4, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 5 and FIG. 6, the rechargeable lithium battery 100 includes an electrode tab 70 illustrated in FIG. 6, or a positive electrode tab 71 and a negative electrode tab 72 illustrated in FIG. 5, the electrode tabs 70/71/72 forming an electric path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

### Example 1

### (1) Manufacturing of Positive Electrode

A positive electrode active material, polyvinylidene fluoride (PVDF) as a binder, and multi-wall carbon nanotube (MWCNT) as a conductive material, were mixed in a weight ratio of 96:1.6:2.4, and then dispersed in N-methyl-2-pyrrolidone to prepare a positive electrode slurry.

The positive electrode active material was a mixture of LiFePO₄ (D₅₀: 1.5 µm) as an olivine-based positive electrode active material and LiNi_{0.91}Co_{0.05}Al_{0.04}O₂ (D₅₀: 14 µm) as a nickel-based layered positive electrode active material in a ratio of 50:50.

A 12 µm-thick Al foil was placed on a magnet with magnetic field strength of 4000 Gauss. Subsequently, while moving the Al foil, the positive electrode active material slurry was coated on this Al foil current collector, exposed to a magnetic field for 9 seconds, and then dried and compressed to manufacture a positive electrode (herein, compression density of a positive electrode active material layer: 2.5 g/cc).

### (2) Manufacturing of Rechargeable Lithium Battery Cell

After preparing a negative electrode active material by mixing artificial graphite and silicon particles in a weight ratio of 93.5:6.5, the negative electrode active material : styrene-butadiene rubber binder : carboxylmethyl cellulose were mixed in a weight ratio of 97:1:2, and then dispersed in distilled water to prepare a negative electrode active material slurry.

The negative electrode active material slurry was coated to be 8 µm thick on a Cu foil, and then dried at 100 °C and pressed to form a negative electrode active material layer.

An electrolyte solution was prepared by mixing 1.5 M lithium salt (LiPF₆) with a carbonate-based solvent prepared by mixing ethylene carbonate (EC):ethylmethyl carbonate (EMC):dimethyl carbonate (DMC) in a volume ratio of 20:40:40.

The manufactured positive and negative electrodes were assembled to manufacture an electrode assembly, which was housed in a prismatic case, and the electrolyte solution was injected thereinto, manufacturing a rechargeable lithium battery cell.

### Example 2

An electrode assembly and a rechargeable lithium battery cell of Example 2 were manufacture in the same manner as in Example 1, with a difference that a positive electrode active material, polyvinylidene fluoride (PVDF) as a binder, and multi-wall carbon nanotube (MWCNT) as a conductive material were mixed in a weight ratio of 96.6:1.0:2.4; and the positive electrode active material was a mixture of LiFePO₄ (D₅₀: 1.5 µm) as an olivine-based positive electrode active material, and LiNi_{0.91}Co_{0.05}Al_{0.04}O₂ (D₅₀: 14 µm) as a nickel-based layered positive electrode active material, in a ratio of 85:15.

### Example 3

An electrode assembly and a rechargeable lithium battery cell of Example 3 were manufacture in the same manner as in Example 1, with a difference that a positive electrode active material, polyvinylidene fluoride (PVDF) as a binder, and multi-wall carbon nanotube (MWCNT) as a conductive material were mixed in a weight ratio of 96.8:0.8:2.4; and the positive electrode active material was a mixture of LiFePO₄ (D₅₀: 1.5 µm) as an olivine-based positive electrode active material, and LiNi_{0.91}Co_{0.05}Al_{0.04}O₂ (D₅₀: 14 µm) as a nickel-based layered positive electrode active material in a ratio of 85:15.

### Example 4

An electrode assembly and a rechargeable lithium battery cell of Example 4 were manufacture in the same manner as in Example 1, with a difference that a positive electrode active material, polyvinylidene fluoride (PVDF) as a binder, Denka black (DB) as a conductive material were mixed in a weight ratio of 93.6:4:2.4; and the positive electrode active material was a mixture of LiFePO₄ (D₅₀: 1.5 µm) as an olivine-based positive electrode active material, and LiNi_{0.91}Co_{0.05}Al_{0.04}O₂ (D₅₀: 14 µm) as a nickel-based layered positive electrode active material in a ratio of 85:15.

### Example 5

An electrode assembly and a rechargeable lithium battery cell of Example 5 were manufacture in the same manner as in Example 1, with a difference that the olivine-based positive electrode active material was changed to LiMn_{0.5}Fe_{0.5}PO₄ (D₅₀: 0.6 µm).

### Example 6

An electrode assembly and a rechargeable lithium battery cell of Example 6 were manufacture in the same manner as in Example 1, with a difference that a positive electrode active material, polyvinylidene fluoride (PVDF) as a binder, and multi-wall carbon nanotube (MWCNT) as a conductive material were mixed in a weight ratio of 96.8:0.8:2.4; and the positive electrode active material was a mixture of LiFePO₄ (D₅₀: 1.5 µm) as an olivine-based positive electrode active material, and LiNi_{0.91}Co_{0.05}Al_{0.04}O₂ (D₅₀: 14 µm) as a nickel-based layered positive electrode active material in a ratio of 70:30.

### Comparative Example 1

LiFePO₄ (D₅₀: 1.5 µm) as the olivine-based positive electrode active material, polyvinylidene fluoride (PVDF) as a binder, and multi-wall carbon nanotube (MWCNT) as a conductive material were mixed in a weight ratio of 96:1.6:2.4 to prepare a positive electrode active material slurry.

In addition, the positive electrode active material slurry was coated on a 12 µm-thick Al foil, and then dried at 100 °C and compressed to form a positive electrode active material layer.

Except for the above, an electrode assembly and a rechargeable lithium battery cell of Comparative Example 1 were manufactured in the same manner as in Example 1.

### Comparative Example 2

An electrode assembly and a rechargeable lithium battery cell of Comparative Example 2 were manufacture in the same manner as in Example 1, with a difference that LiFePO₄ (D₅₀: 1.5 µm) as the olivine-based positive electrode active material, polyvinylidene fluoride (PVDF) as a binder, and multi-wall carbon nanotube (MWCNT) as a conductive material were mixed in a weight ratio of 96.6:1.0:2.4.

### Comparative Example 3

An electrode assembly and a rechargeable lithium battery cell of Comparative Example 3 were manufacture in the same manner as in Example 1, with a difference that the olivine-based positive electrode active material was changed to LiMn_{0.5}Fe_{0.5}PO₄ (D₅₀: 0.6 µm).

### Comparative Example 4

An electrode assembly and a rechargeable lithium battery cell of Comparative Example 4 were manufacture in the same manner as in Example 1, with a difference that LiNi_{0.91}Co_{0.05}Al_{0.04}O₂ (D₅₀: µm) as a nickel-based layered positive electrode active material, polyvinylidene fluoride (PVDF) as a binder, and multi-wall carbon nanotube (MWCNT) as a conductive material were mixed in a weight ratio of 96.8:0.8:2.4.

### Evaluation Example 1: Evaluation of Positive Electrode

### (1) DD and I₍₀₀₂₎/I₍₂₀₀₎ of Olivine-based Positive Electrode Active Material

The rechargeable lithium battery cells according to Examples 1 to 6 and Comparative Examples 1 to 4 were twice charged and discharged at 0.1 C, and then completely discharged to 2.75 V at the 0.1 C. The thus completely discharged battery cells were disassembled to obtain the positive electrodes.

For the positive electrodes, XRD using a CuKα ray as a target ray was measured by using an XRD equipment of X'Pert (Malvern PANalytical Ltd.) but removing a monochrometer equipment to improve peak intensity resolution. Herein, the measurement was performed under conditions of 2θ = 10 ° to 80 °, a scan speed (°/S) = 0.06436, a step size of 0.026 °/step.

The measured XRD results were used to obtain DD of the olivine-based positive electrode active materials, and the results are shown in Table 1 below.

DD was obtained as DD = (Ia/Itotal) * 100 by using the measured XRD results to measure integral areas of peaks appearing at 2θ = 26.5±0.2 ° ((002) plane), 42.4±0.2 ° ((100) plane), 43.4±0.2 ° ((101)R plane), 44.6±0.2 ° ((101)H plane), 54.7±0.2 ° ((004) plane), 77.5±0.2 ° ((110) plane) and then, calculating la is defined as an integral area sum of the peaks appearing at 2θ = 42.4±0.2 ° ((100) plane), 43.4±0.2 ° ((101)R plane), 44.6±0.2 ° ((101)H plane), and 77.5±0.2 ° ((110) plane) and Itotal is defined as a total integral area of all the peaks appearing at 2θ=26.5±0.2 ° ((002) plane), 42.4±0.2 ° ((100) plane), 43.4±0.2 °((101)R plane), 44.6±0.2 ° ((101)H plane), 54.7±0.2 ° ((004) plane), and 77.5±0.2 ° ((110) plane).

In addition, for the olivine-based positive electrode active materials, a diffraction peak intensity ratio I₍₀₀₂₎/I₍₂₀₀₎ of the (002) plane and the (200) plane was calculated from the X-ray diffraction spectra.

(2) Compression Density: obtained by measuring LL (mg/cm²) / thickness (g/cc) of each of the positive electrode active material layers.

(3) Porosity: measured by using a mercury decompression method.

(4) Ionic Resistance (Rion): evaluated as tortuosity after manufacturing positive electrode symmetric cells. Herein, an electrolyte solution was the same as used in Example 1 above.

**Table 1:**

| | Olivine-based positive electrode active material | | Positive electrode active material layer | | Positive electrode |
|---|---|---|---|---|---|
| | DD (Iₜₒₜₐₗ/Iₐ) | I₍₀₀₂₎/I₍₂₀₀₎ | Compression density (g/cc) | Porosity (vol%) | Rᵢₒₙ (Ωcm²) |
| Example 1 | 20 | 0.9 | 2.5 | 28 | 12 |
| Example 2 | 23 | 0.8 | 2.5 | 30 | 13 |
| Example 3 | 23 | 0.9 | 2.5 | 28 | 12 |
| Example 4 | 24 | 0.8 | 2.5 | 28 | 12 |
| Example 5 | 20 | 0.7 | 2.3 | 29 | 13 |
| Example 6 | 20 | 0.7 | 2.3 | 29 | 11 |
| Comparative Example 1 | 8 | 0.4 | 2.5 | 23 | 19 |
| Comparative Example 2 | 7 | 0.5 | 2.5 | 25 | 18 |
| Comparative Example 3 | 8 | 0.4 | 2.5 | 25 | 20 |
| Comparative Example 4 | 9 | 0.4 | 2.5 | 25 | 19 |

### Evaluation Example 2: Evaluation of Electrochemical Characteristics of Rechargeable Lithium Battery Cell

The rechargeable lithium battery cells of Examples 1 to 6 and Comparative Examples 1 to 4 were repeatedly charged and discharged 60 times at 1.0 C within a voltage range of 3.0 V to 4.3 V at 25 °C to calculate a ratio of 60^{th} discharge capacity to initial discharge capacity, which was shown in Table 2 below.

**Table 2:**

| | Rechargeable lithium battery cell |
|---|---|
| | Room-temperature cycle-life (%) |
| Example 1 | 98 |
| Example 2 | 96 |
| Example 3 | 96 |
| Example 4 | 96 |
| Example 5 | 95 |
| Example 6 | 97 |
| Comparative Example 1 | 90 |
| Comparative Example 2 | 88 |
| Comparative Example 3 | 88 |
| Comparative Example 4 | 88 |

### Conclusion

The positive electrodes of some example embodiments represented by Examples 1 to 6 may improve the diffusion property, energy density, rate capability, and the like, of lithium ions during charge and discharge of rechargeable lithium battery cells by controlling the orientation of the olivine-based positive electrode active material.

Moreover, because the positive electrode of the above example embodiments further includes the nickel-based layered positive electrode active material in addition to the olivine-based positive electrode active material with controlled orientation, the above-described effect may be further improved.

While this disclosure has been described in connection with what is presently considered to be practical example embodiments, it is to be understood that the disclosure is not limited to the disclosed embodiments. On the contrary, the disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 10a: | positive electrode current collector | | |
| 10b | positive electrode active material layer | | |
| 1: | olivine-based positive electrode active material | | |
| 2: | nickel-based layered positive electrode active material | | |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode (10) for a rechargeable lithium battery (100), the positive electrode (10) comprising:
a positive electrode current collector (10a), and a positive electrode active material layer (10b) on the positive electrode current collector (10a);
wherein the positive electrode active material layer (10b) comprises:
an olivine-based positive electrode active material (1), and
a nickel-based layered positive electrode active material (2);
the olivine-based positive electrode active material (1) has:
a DD (Degree of Divergence) value defined by Equation 1 that is greater than or equal to about 19; Equation 1: $DD \left(Degree of Divergence\right) = \left({I}_{a}{/ I}_{total}\right) * 100 ;$
wherein Iₐ is a sum of peak intensities at non-planar angles measured by XRD using a CuK α ray, and Iₜₒₜₐₗ is a sum of peak intensities at all angles measured by XRD using a CuK α ray.

2. The positive electrode (10) as claimed in claim 1, wherein the olivine-based positive electrode active material (1) has a DD (Degree of Divergence) value defined by Equation 1 that is in a range to ≥ 19 to ≤ 60.

3. The positive electrode (10) as claimed in claim 1 or 2, wherein, in Equation 1:
Iₐ is a sum of peak intensity values appearing at 2θ=42.4±0.2 °, 43.4±0.2 °, 44.6±0.2 °, and 77.5±0.2 °, and
Iₜₒₜₐₗ is a sum of peak intensity values appearing at 2θ=26.5±0.2 °, 42.4±0.2 °, 43.4±0.2 °, 44.6±0.2 °, 54.7±0.2 °, and 77.5±0.2 °.

4. The positive electrode (10) as claimed in any one of claims 1 to 3, wherein the olivine-based positive electrode active material (1) has a diffraction peak intensity ratio I₍₀₀₂₎/I₍₂₀₀₎ of the (002) plane and the (200) plane in an X-ray diffraction spectrum that is greater than about 0.5 and less than or equal to about 1.

5. The positive electrode (10) as claimed in any one of claims 1 to 4, wherein the positive electrode active material layer (10b) has:
a compression density that is greater than or equal to about 2 g/cc and less than or equal to about 3 g/cc, and
a porosity that is greater than about 25 vol% and less than or equal to about 35 vol%.

6. The positive electrode (10) as claimed in any one of claims 1 to 5, wherein an ionic resistance (Rion) of the positive electrode (10) is greater than or equal to about 10 Ωcm² and less than about 18 Ωcm².

7. The positive electrode (10) as claimed in any one of claims 1 to 6, wherein the olivine-based positive electrode active material (1) is represented by Chemical Formula 1;
Chemical Formula 1: LiₐFeₓM_{y}PO_{4-b}X_{b};
wherein:
0.9≤a≤1.1, 0.1≤x≤1, 0≤y≤0.9, and 0≤b≤0.1;
M comprises one or more of Al, Co, Cr, Cu, Mg, Mn, Mo, Ni, Se, Si, Ti, V, Zn, Nb and Zr; and
X comprises one or more of F and CI.

8. The positive electrode (10) as claimed in any one of claims 1 to 7, wherein a D₅₀ particle diameter of the olivine-based positive electrode active material (1) is in a range to ≥ 0.1 µm to ≤ 10 µm.

9. The positive electrode (10) as claimed in any one of claims 1 to 8, wherein the nickel-based layered positive electrode active material (2) is represented by Chemical Formula 2;
Chemical Formula 2: Liₐ₁Niₓ₁M¹_{y1}M²_{z1}O_{2-b1}X_{b1};
wherein:
0.9≤a1≤1.8, 0.3≤x1≤1, 0≤y1≤0.7, 0≤z1≤0.7, 0.9≤x1+y1+z1≤1.1, and 0≤b1≤0.1;
M¹ and M² each independently comprises one or more of Al, B, Ba, Ca, Ce, Co, Cr, Cu, Fe, Mg, Mn, Mo, Nb, Si, Sn, Sr, Ti, V, W, and Zr; and
X comprises one or more of F, P, and S.

10. The positive electrode (10) as claimed in any one of claims 1 to 9, wherein a D₅₀ particle diameter of the nickel-based layered positive electrode active material (2) is in a range to ≥ 1 µm to ≤ 20 µm.

11. The positive electrode (10) as claimed in any one of claims 1 to 10, wherein a total amount of the olivine-based positive electrode active material (1) and the nickel-based layered positive electrode active material (2) is in a range to ≥ 90 wt% to ≤ 99.5 wt% based on100 wt% of the positive electrode active material layer (10b).

12. The positive electrode (10) as claimed in any one of claims 1 to 11, wherein a weight ratio of the olivine-based positive electrode active material (1) and the nickel-based layered positive electrode active material (2) is in a range of about 1:99 to about 99:1.

13. The positive electrode (10) as claimed in any one of claims 1 to 12, wherein:
the positive electrode active material layer (10b) further comprises a conductive material, and
the conductive material comprises at least one of nano carbon (Nano-C), multi-wall carbon nanotube (MWCNT), a multi-wall carbon nanotube (MWCNT), a single-wall carbon nanotube (SWCNT), a thin-wall carbon nanotube (TWCNT), graphene, and a combination thereof.

14. The positive electrode (10) as claimed in any one of claims 1 to 13, wherein a compression density of the positive electrode active material layer (10b) is in a range to ≥ 2.3 g/cc to ≤ 3.0 g/cc.

15. A rechargeable lithium battery (100), comprising:
the positive electrode (10) as claimed in any one of claims 1 to 14;
a negative electrode (20); and
a separator (30) between the positive electrode (10) and the negative electrode (20).
